(19)

Europäisches Patentamt
European Patent Office
Office européen des brevets

(11) **EP 1 910 862 B1**

(12) **EUROPEAN PATENT SPECIFICATION**

(45) Date of publication and mention of the grant of the patent:
**20.01.2010 Bulletin 2010/03**

(21) Application number: **05759966.4**

(22) Date of filing: **07.07.2005**

(51) Int Cl.:
*G01S 11/08* (2006.01)

(86) International application number:
**PCT/JP2005/012980**

(87) International publication number:
**WO 2007/007408 (18.01.2007 Gazette 2007/03)**

(54) **DELAY ESTIMATION APPARATUS AND METHOD**

VORRICHTUNG UND VERFAHREN ZUR VERZÖGERUNGSSCHÄTZUNG

APPAREIL ET PROCEDE D'ESTIMATION DE DELAI

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**16.04.2008 Bulletin 2008/16**

(73) Proprietor: **National Institute of Information and Communications Technology**
**Koganei-shi**
**Tokyo 184-8795 (JP)**

(72) Inventors:
• **QI, Yihong**
  **NAT. INST. OF INFORMATION & TECHNOLOGY**
  **Koganei-shi, Tokyo 1848795 (JP)**
• **KOHNO, Ryuji**
  **NAT. INST. OF INFORMATION & TECHNOLOGY**
  **Koganei-shi, Tokyo 1848795 (JP)**

(74) Representative: **Klingseisen, Franz**
**Klingseisen & Partner**
**Postfach 10 15 61**
**80089 München (DE)**

(56) References cited:
**US-A1- 2004 229 637     US-B1- 6 839 378**

• **LEE J-Y ET AL: "Ranging in a dense multipath environment using an UWB radio link" IEEE JOURNAL ON SELECTED AREAS IN COMMUNICATIONS, IEEE SERVICE CENTER, PISCATAWAY, US, vol. 20, no. 9, December 2002 (2002-12), pages 1677-1683, XP002271265 ISSN: 0733-8716 cited in the application**
• **KRASNY L ET AL: "Performance of successive cancellation techniques for time of arrival estimation" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY : IEEE, US, vol. VOL. 1 OF 4. CONF. 56, 24 September 2002 (2002-09-24), pages 2278-2282, XP010608839 ISBN: 0-7803-7467-3**

**Description**

Technical Field

The present invention relates to a method and an apparatus for delay estimation of radio signals in a wireless communication system.

Background Art

Wireless ranging is to estimate the distance between a transmitter and a receiver by using radio signals propagating from the pair of the transmitter and the receiver in a wireless communication system. It has become an important issue motivated by an increasing demand from a variety of wireless networks. Specifically, ranging in a UWB (ultra wide band) system has been recognized as a key feature of the recently developing IEEE WPAN 802.15.4a standard. In many practical situations, a radio signal is inevitably subject to multipath propagation, which is also a main characteristic of UWB signals. From the viewpoint of ranging, the common wisdom is to estimate the time delay of the first arriving component of the received signal. However, the main difficulty lies in that the estimation performance would be degraded considerably when the energy of the first arriving component is not dominant among multipath components of the received signal.

Several schemes have been proposed for the first arrival detection. A generalized maximum likelihood (ML) method [1] ([1] J-Y. Lee and A. R. Scholtz, "Ranging in a dense mulitpath environment using a UWB radio link," IEEE J. Selected Areas in Communications, vol. 20, pp. 1677-83, December 2002) is examined in a UWB system. With conventional CDMA (Code Division Multiple Access) and WCDMA (Wideband CDMA) signals, techniques such as the minimum variance method [2] ([2] J. Vidal, M. Najar and R. Jativa, "High resolution time-of-arrival detection for wireless positioning systems," Proc. 56th IEEE Vehicular Technology Conference (VTC 2002-Fall), vol. 4, pp. 2283-7, September 2002) and the binary hypothesis test [3] ([3] J. Vidal and R. E. Jativa, "First arriving path detection for subscriber location in mobile communication systems," Proc. IEEE International Conference on Acoustics, Speech, and Signal Processing 2002 (ICASSP 2002), vol. 3, pp. 2733-36, May 2002) have been explored. These schemes exhibit various advantages in certain circumstances. Yet their formulations mainly start from analog signals or discrete samples of received signals, hence may not be directly applicable to some practical systems, e.g., some UWB systems. High computational complexity is another limitation.

US-B1-6,839,378 discloses a multipath delay estimation of a direct sequence spread spectrum (DS-SS) signal transmitted in a multipath fading channel accomplished by measuring the envelop of the signal to determine a new delay estimate. Delay estimates are also obtained in a ray strength order, by subtracting out the influence of stronger rays on the weaker ones. This subtraction approach can be performed iteratively, allowing further refinement of the delay estimates. Maximum likelihood (ML) delay estimates can also be obtained by exploiting side information regarding the transmit and receive pulse-shapes.

Disclosure of the Invention

This invention presents a first arrival detection method and an apparatus for a wireless communication system, in particular, for a UWB system. In this invention, an iterative scheme is devised. In each iteration step, the present strongest signal component is estimated, and is removed from sample data to be processed in the next iteration. The iteration is terminated when no more such a component above certain threshold can be detected. The smallest delay estimate is taken as the first arrival estimate. Compared with existing schemes, this invention can greatly improve the estimation accuracy when the first arriving signal component is not dominant among multipath components of a received signal, and the computation complexity is very low.

The first arrival detection apparatus comprises: correlation means which generates a correlation output based on a received signal and a supplied template waveform, AD conversion means which uniformly samples the correlation output generated by the correlation means into discrete samples; and arithmetic operation means which estimates the time delay of the first arriving signal component based on the discrete samples generated by the AD conversion means, specifically, an iterative scheme is devised: in each iteration, samples representing the dominant component of a present sample sequence are selected first, the delay and the amplitude of the dominant component are then estimated based on the selected samples, next check whether a termination criterion is satisfied, if it is satisfied, the iteration is terminated, otherwise, update the sample sequence by first eliminating those samples with time instants later than the delay estimate just obtained and then deducting the detected dominant component from the remaining samples.

In addition, in the iterative scheme adopted by the arithmetic operation means, the amplitude estimate of the dominant component in the present sample sequence is derived as a maximum likelihood solution given the selected samples and the delay estimate corresponding to the dominant component.

The first arrival detection method comprises: a correlation step at which a correlation function between a received signal and a template waveform is computed; an AD conversion step at which the correlation function generated at the correlation step is uniformly sampled into discrete samples; and an arithmetic operation step at which the time delay of the first arriving signal component is estimated based on the discrete samples produced at the AD conversion step, specifically, an iterative scheme is adopted: in each iteration step, samples representing the dominant component of a present sample sequence are selected first, the delay and the amplitude of the dominant component are then estimated based on the selected samples, next check whether a termination criterion is satisfied, if it is satisfied, the iteration is terminated, otherwise, update the sample sequence by first eliminating those samples with time instants later than the delay estimate just obtained and then deducting the detected dominant component from the remaining samples.

In addition, in the iterative scheme adopted by the arithmetic operation means, the amplitude estimate of the dominant component in the present sample sequence is derived as a maximum likelihood solution given the selected samples and the delay estimate corresponding to the dominant component.

Brief Description of the Drawings

FIG. 1 is a structural diagram of a communication system for illustrating the invention.
FIG. 2 is a block diagram of a transmitter for illustrating the invention.
FIG. 3 is a block diagram of a receiver, which contains the first arrival detection apparatus according to the invention.
FIG. 4 is a block diagram of the first arrival detection apparatus according to the invention.
FIG. 5 is a flowchart for illustrating the first arrival detection procedure according to the invention, which corresponds to the block diagram of Fig. 4.
FIG. 6 is a drawing showing samples of a correlation function related to a received signal subject to multipath propagation.
FIG. 7A and 7B are drawings for explaining arithmetic operations in the iteration scheme according to the invention.
FIG. 8A and 8B are other drawings for explaining arithmetic operations in the iteration scheme according to the invention.

Best Mode for Carrying Out the Invention

An embodiment of the invention is now described in detail by referring to the figures in the previous section.

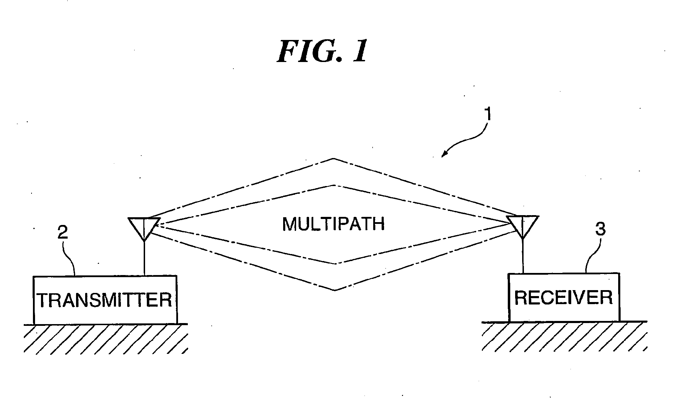

FIG. 1 shows the system configuration of a communication system 1 according to the invention. The communication system 1 is a system for wireless communication between point A and point B, employing the UWB (Ultra Wide Band) technology. The communication system 1 consists of transmitter 2 sited at the point A and receiver 3 sited at the point B.
The UWB technology is a technology for short-range radio communication, involving the intentional generation and transmission of radio frequency energy that spreads over a very large frequency range, overlapping several frequency bands allocated to radio communication services. The transmitter 2 and the receiver 3 can transmit and receive UWB signals, respectively. A UWB signal is defined as a radio signal with -10 dB bandwidth of at least 500 MHz or a fractional bandwidth greater than 0.2.

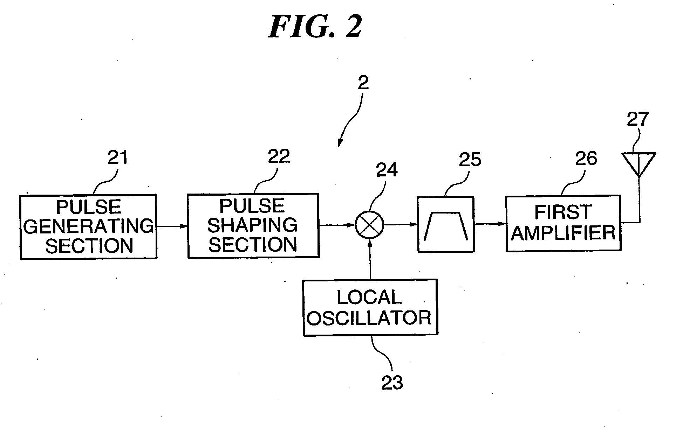

FIG. 2 shows the block diagram of the transmitter 2 that transmits a UWB signal.
The transmitter 2 comprises: a pulse generating section 21 which generates a basic UWB signal, a pulse shaping section 22 which shapes the UWB signal generated by the pulse generating section 21 according to certain spectral criteria, a local oscillator 23 which supplies a frequency reference signal to the mixer circuit 24, a mixer circuit 24 which performs frequency conversion on the output signal from the pulse shaping section 22 by using the reference frequency signal supplied from the oscillator 23, a filter 25 for limiting the bandwidth of the frequency-converted signal generated by the mixer circuit 24, a first amplifier 26 which amplifies the output signal from the filter 25, an antenna 27 which radiates the output signal from the first amplifier 26.
The pulse generating section 21 generates a sequence of UWB pulses as a basic UWB signal. A UWB pulse is a signal whose bandwidth is inverse of the pulse duration usually on the order of a nanosecond or a fraction of a nanosecond. The pulse sequence generated by the pulse generating section 21 is sent directly to the pulse shaping section 22.
The pulse shaping section 22 shapes the basic UWB signal generated by the pulse generating section 21 according to certain spectral requirement.
The local oscillator 23 generates a frequency reference signal for frequency conversion in the mixer circuit 24. The frequency of the reference signal may be precisely controlled by an unillustrated PLL (Phase-Locked Loop) circuit or the like.

The mixer circuit 24 converts the output signal from the pulse shaping section 22 into a desired frequency band by using the frequency reference signal generated from the local oscillator 23.

The bandpass filter 25 limits the output signal from the mixer circuit 24 within the desired frequency band by removing the unwanted spectral components beyond the desired band. The output signal from the filter 25 is directly fed to the first amplifier 26.

The first amplifier 26 amplifies the output signal from the filter 25 and further modifies the signal in such a way that the signal spectrum is flat within the desired frequency band.

An antenna 27 radiates the output signal generated from the first amplifier 26 as radio signal waves into space which is to be received by the receiver 3 at the point B. Hereinafter, the output signal generated by the antenna 27 is denoted by s(t).

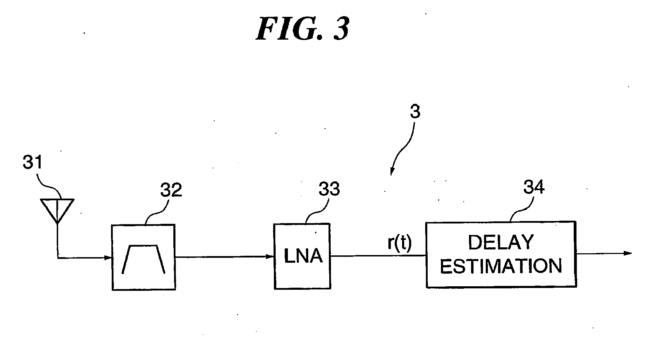

FIG. 3 shows the block diagram of the receiver 3, which receives the UWB signal, transmitted from the transmitter 2.

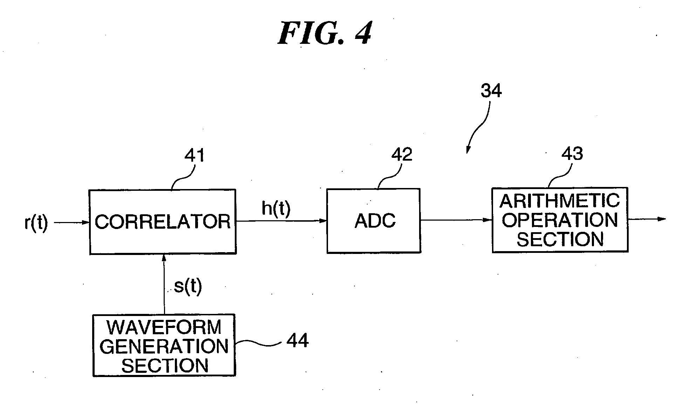

The receiver 3 comprises: an antenna 31 which captures the radio signal transmitted from the transmitter 2 in the air, a bandpass filter 32 which removes the unwanted spectral components of the output signal from the antenna 31, a low-noise amplifier (LNA) 33 which amplifies the output signal from the filter 32, a first arrival detection apparatus 34 which estimates the time delay of the first arriving signal component of the output signal from the LNA 33 and, is specified in FIG 4.

The antenna 31 captures the UWB radio signal transmitted from the transmitter 2 in the air, and converts the radio signal into an electrical signal.

The bandpass filter 32 limits the output signal from the antenna 31 within a desired frequency band by removing unwanted spectral components beyond the desired bandwidth.

The LNA 33 amplifies the output signal from the filter 32 in such a manner that amplification of the noise component contained in the signal is controlled under certain level. The amplified signal generated by the LNA 33 is sent to the first arrival detection apparatus 34. Hereinafter, the signal generated by the LNA 33 is denoted by r(t).

The first arrival detection apparatus 34 estimates the time delay of the first arriving signal component of the output signal from the LNA 33,'and is specified in FIG 4.

FIG. 4 shows the block diagram of the first arrival detection apparatus corresponding to the block 34 in the receiver 3, which estimates the time delay of the first arriving signal component of the output signal from the LNA 33 in the receiver 3.

The first arrival detection apparatus comprises: a waveform generation section 44 which generates a template waveform equivalent to the transmit signal s(t) transmitted from the transmitter 2, a correlator 41 which computes the correlation function between the output signal r(t) generated by the LNA 33 in receiver 3 and the template waveform s(t) supplied by the waveform generation section 44, denoted by h(t), an analog-digital converter (ADC) 42 which uniformly samples the correlation output h(t) generated by the correlator 41 into discrete samples, an arithmetic operation section 43 estimates the time delay of the first arriving signal component of the signal r(t) output from the LNA 33 by using the discrete samples generated from the ADC 42.

The waveform generating section 44 generates a template waveform. The template waveform is equivalent to the transmit signal s(t) transmitted from the transmitter 2. The output signal from the waveform generating section 44 is sent to the correlator 41.

The correlator 41 computes a correlation function h(t) between the received signal r(t) output from the LNA 33 in the receiver 3 and the template waveform s(t) generated from the waveform generating section 44. The output signal h(t) from the correlator 41 is an analog signal, and is supplied to the ADC 42.

The ADC 42 uniformly samples the output analog signal h(t) from the correlator 41 into discrete samples, and sends the discrete samples to the arithmetic operation section 43.

The arithmetic operation section 43 estimates the time delay of the first arriving signal component of the received signal r(t) generated by the LNA 33 based on the discrete samples output from the ADC 42 by using an iteration scheme to be discussed next.

The application of the first arrival detection apparatus and method according to this invention is not limited to the UWB system as just described, but can be utilized in any communication system adopting digital sampling.

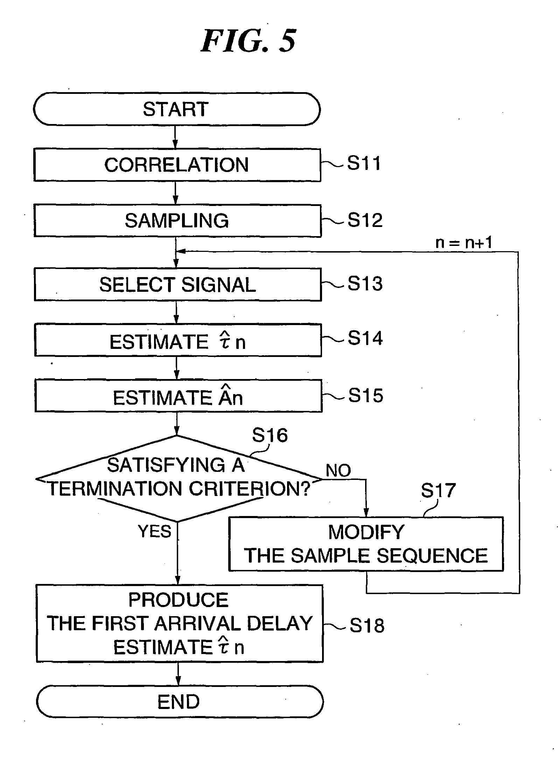

The first arrival detection scheme adopted in the first arrival detection apparatus of Fig. 4 is presented in detail next, which represents the main contribution of this invention. The corresponding flowchart is shown in Fig. 5.

The first arrival detection scheme according to this invention can greatly improve the estimation accuracy when a first arriving signal component is not dominant among multipath components of a received signal, and the computation complexity is very low. In this invention, an iterative scheme is devised. In each iteration, the present strongest signal component is estimated, and is removed from sample data to be processed in the next iteration. The iteration is terminated when no more such a component above certain threshold can be detected. The smallest delay estimate is taken as the first arrival estimate.

Consider the radio signal s(t) propagating from the transmitter 2 to the receiver 3 is subject to multipath propagation. The received signal r(t) is expressed as

$$r(t) = \sum_{i=1}^{I} A_i \cdot s(t - \tau_i) + n(t), \qquad\qquad (1)$$

where I is the number of total multipath components, Ai and $\tau_i$ are the amplitude and the time delay for the i-th multipath component, respectively, and n(t) is a white Gaussian noise process with spectral density No.

[0039] Our first arrival detection scheme consists of the following eight steps. The description and rationale of each step are presented along with reference to the corresponding components in the flowchart Fig. 5 and the block diagram Fig. 4.

At step S11 in Fig. 5, compute the correlation function between the received signal r(t) and the transmit waveform s(t), which is conducted by the correlator 41 in Fig. 4. The correlation function, denoted by h(v), is given in the following equation

$$h(v) = \sum_{i=1}^{I} A_i \cdot g(v - \tau_i) + z(v), \qquad\qquad (2)$$

where g(v) is the autocorrelation function of s(t) as

$$g(v) = \int s(t)s(t - v)\, dt, \qquad\qquad (3)$$

and z(v) is a noise component as

$$z(v) = \int n(t)s(t - v)\, dt. \qquad\qquad (4)$$

The noise z(v) is a correlated Gaussian process. Note that the signal waveform s(t) and hence its autocorrelation function g(v) are known at the receiver 3 in advance.

At step S12, uniformly sample the correlation function h(v) at the ADC 42. Let the sampling' interval of the ADC 42 be T. Sampling h(v) of equation (2) yields

$$h(t_n) = \sum_{i=1}^{I} A_i \cdot g(t_n - \tau_i) + z(t_n), \text{ for } n = 1, 2, \cdots, N, \qquad\qquad (5)$$

where $t_n = t_0 + nT$, and $t_0$ is chosen such that $|\,h(t)\,|$ is sufficient small for all $t > t_N$ and $t < t_1$. The expression $|a|$ means the absolute value of quantity "a". The noise term $z(tn)$'S in the samples can be shown as correlated Gaussian random variables with the zero mean and covariance matrix

$$\mathbf{V}_N = N_0 \begin{pmatrix} g(0) & g(T) & \cdots & g((N-1)T) \\ g(T) & g(0) & \cdots & g((N-2)T) \\ \vdots & \vdots & \ddots & \vdots \\ g((N-1)T) & g((N-2)T) & \cdots & g(0) \end{pmatrix} \qquad (6)$$

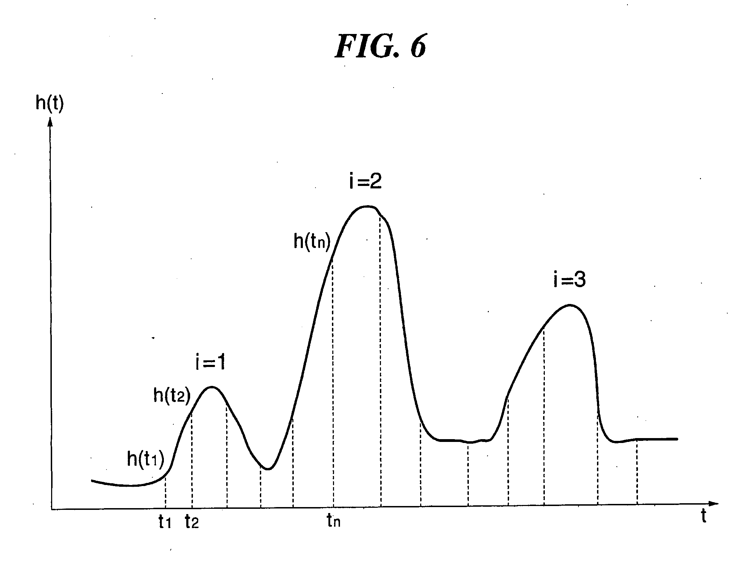

FIG. 6 is a graphic illustration of samples of the correlation function, which shows three multiple local maximal points due to three multipath components of the received signal with different delays.

All the arithmetic operations in the following steps constitute an n-th iteration in the iteration scheme for detecting the first arriving signal component of the received signal, and are conducted in the arithmetic operation section 43.

Define

$$t_N \overset{\text{def}}{=} [t_1 \ t_2 \ \cdots \ t_N]^T, \qquad (7)$$

$$h(t_N) \overset{\text{def}}{=} [h(t_1) \ h(t_2) \ \cdots \ h(t_N)]^T, \qquad (8)$$

and

$$g_{t_N}(v) \overset{\text{def}}{=} [g(t_1 - v) \ g(t_2 - v) \ \cdots \ g(t_N - v)]^T, \qquad (9)$$

where superscript "T" denotes transpose.

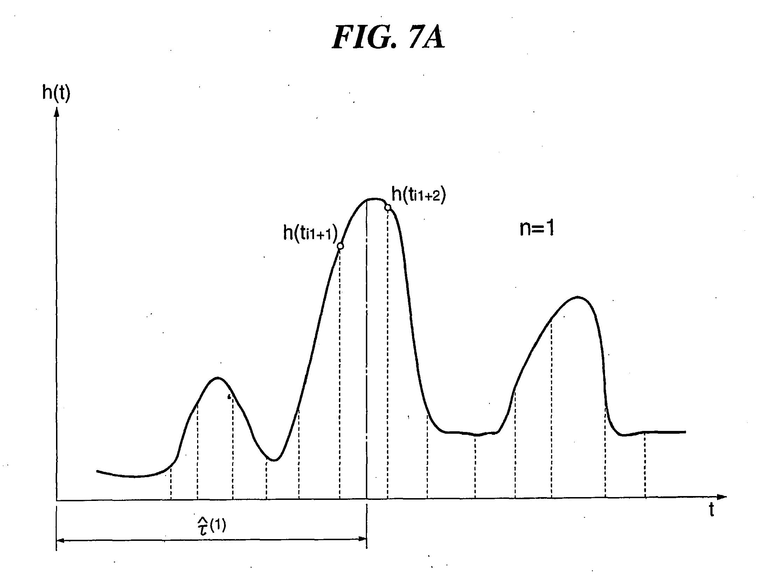

At Step S13, select jn consecutive samples representing the strongest component from the data sequence in the present iteration, which is denoted by $h^{(n-1)}(t_{cn})$ with corresponding time instants $t_{cn} = (t_{in+1} \ t_{in+2} \cdots t_{in+jn})^T$. The data sequence $h^{(n-1)}(t_{cn})$ is generated at the end of the previous iteration to be shown in equation (13). In the first iteration, the data sequence is the sample sequence generated at the sampling step S12. The value in and $j_n$ are chosen in such a manner that $h^{(n-1)}(t_{cn})$ represents the strongest component and contains less interference from other multipaths. Specifically, $j_n = 2$ or $3$ can be utilized. A graphic illustration of the sample selection in the first iteration, i.e., n = 1, is shown in FIG 7A, where two samples h (ti1+1) and h(ti1+2) are selected for representing the strongest component in the first iteration.

At Step 14, obtain the delay estimate of the strongest signal component denoted by $\hat{\tau}^{(n)}$ based on the samples $h^{(n-1)}(t_{cn})$ selected at the last step, by adopting an existing delay estimation method, e.g., the simplified maximum likelihood method in [4] ([4] Y.Qi and R. Kohno, "Mitigation of sampling-induced errors in delay estimation," Proc. 2005 IEEE International Conference on Ultra-Wideband (2005 ICU), September, 2005 in Zurich, Switzerland). In FIG 7A, as an example a delay estimate $\hat{\tau}^{(1)}$ of the strongest signal component in the first iteration is obtained based on the two selected samples h (t_{i1+1}) and h(t_{i1+2}).

At Step 15, estimate the amplitude of the strongest signal component. Given the selected samples $h^{(n-1)}(t_{cn})$ with corresponding time instants $t_{cn} = (t_{in+1} \ t_{in+2} \cdots t_{in+jn})^T$ and the delay estimate $\hat{\tau}^{(n)}$ of the strongest component, which are obtained at the last two steps, the problem of amplitude estimation can be cast into the maximum likelihood (ML) estimation, which is equivalent to finding $\hat{A}^{(n)}$ such that the log likelihood function

$$[h^{(n-1)}(t_{cn}) - a g_{t_{cn}}(\hat{\tau}^{(n)})]^T \cdot \mathbf{V}_{j1}^{-1} \cdot [h^{(n-1)}(t_{cn}) - a g_{t_{cn}}(\hat{\tau}^{(n)})]$$ is minimized with respect to a, i.e.,

$$\hat{A}^{(n)} = \arg \min_a \; [h^{(n-1)}(t_{cn}) - a g_{t_{cn}}(\hat{\tau}^{(n)})]^T \cdot V_{j_1}^{-1} \cdot [h^{(n-1)}(t_{cn}) - a g_{t_{cn}}(\hat{\tau}^{(n)})], \quad (10)$$

where $V_{j1}$ is defined in equation (6) representing the noise statistics, and expression $gt_{cn}(\hat{\tau}^{(n)})$ is defined in equation (9) representing a noise-free copy of the strongest component. The ML estimate $\hat{A}^{(n)}$ can be shown as

$$\hat{A}^{(n)} = \frac{g_{t_{cn}}(\hat{\tau}^{(n)}) W_{j_n} h^{(n-1)}(t_{cn})}{g_{t_{cn}}(\hat{\tau}^{(n)}) W_{j_n} g_{t_{cn}}(\hat{\tau}^{(n)})}, \quad (11)$$

where Wjn is given in form as

$$W_N = \begin{pmatrix} |\widetilde{V}_{N(1,1)}| & |\widetilde{V}_{N(1,2)}| & \cdots & |\widetilde{V}_{N(1,N)}| \\ |\widetilde{V}_{N(2,1)}| & |\widetilde{V}_{N(2,2)}| & \cdots & |\widetilde{V}_{N(2,N)}| \\ \vdots & \vdots & \ddots & \vdots \\ |\widetilde{V}_{N(N,1)}| & |\widetilde{V}_{N(N,2)}| & \cdots & |\widetilde{V}_{N(N,N)}| \end{pmatrix}, \quad (12)$$

with $\widetilde{V}_{N(n,m)}$ being a square matrix of order (N-1) obtained by removing the n-th row and the m-th column of $V_N$ of equation (6) and |G| being the determinant of matrix G.

At Step S16, check whether a termination criterion is satisfied. The termination criterion is defined by whether the magnitude of the present strongest component, given by the absolute value of the amplitude $|\hat{A}^{(n)}|$, is below certain threshold, or whether no sample data with time instants earlier than the time delay estimate $\hat{\tau}^{(n)}$ in the data sequence is available. The threshold can be defined as the noise level in the received signal, i.e., the square root of the noise spectral density. If the termination criterion is true, move to Step S18 which terminates the iteration; otherwise, move to Step S17 and continue another round of iteration.

At Step S17, i.e., when the termination criterion is not satisfied, update the sample sequence, and start a new round iteration, specifically, the (n+1) th iteration, by going back to Step S13. The new (updated) sample sequence, denoted by $h^{(n)}(\hat{A}^{(n)}, \hat{\tau}^{(n)})$, is produced by first eliminating the data samples with time instants later than the delay estimate $\hat{\tau}^{(n)}$ from the present data sequence $h^{(n-1)}(\hat{A}^{(n-1)}, \hat{\tau}^{(n)})$, which yields a truncated sequence $h^{(n-1)}(\hat{A}^{(n-1)}, \hat{\tau}^{(n)})$, and then deducting the strongest component given by $\hat{A}^{(n)}gt(\hat{\tau}^{(n)})(\hat{\tau}^{(n)})$ from the truncated sequence as

$$h^{(n)}(\hat{A}^{(n)}, \hat{\tau}^{(n)}) = h^{(n-1)}(\hat{A}^{(n-1)}, \hat{\tau}^{(n)}) - \hat{A}_n g_{t(\hat{\tau}^{(n)})}(\hat{\tau}^{(n)}), \quad (13)$$

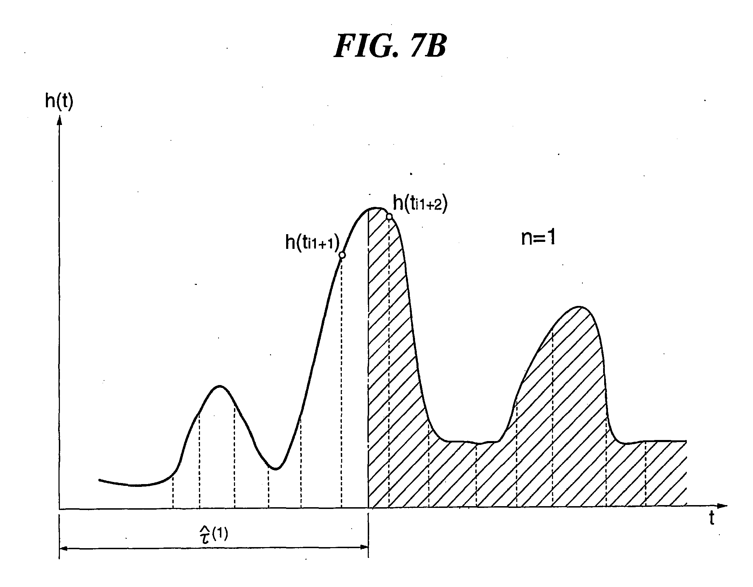

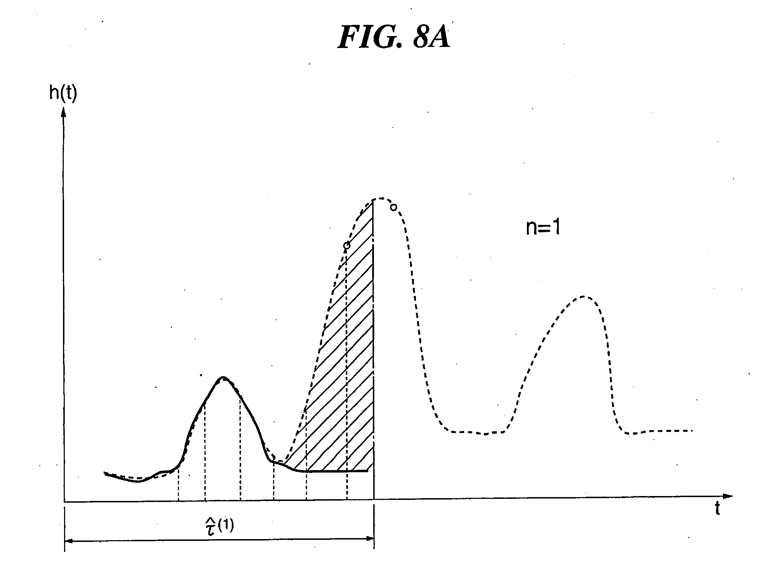

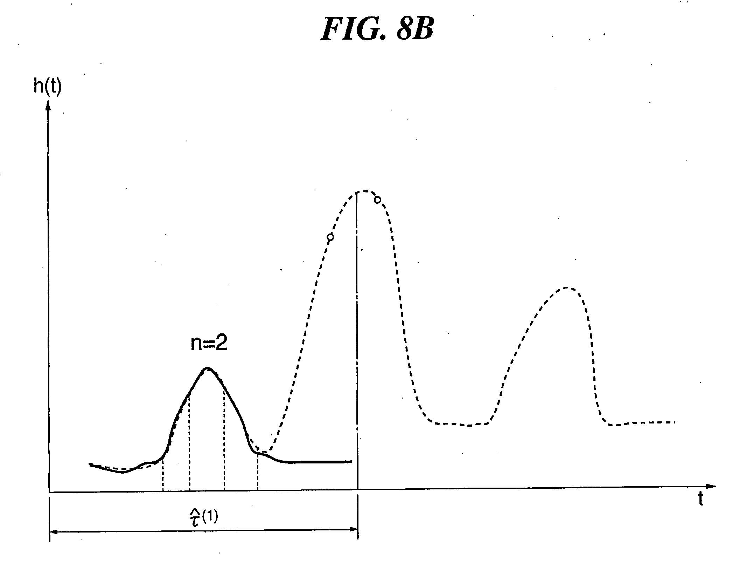

where $t(\hat{\tau}^{(n)}) = (t_1 \; t_2 \cdots \hat{\tau}^{(n)})^T$. FIG.7B is a graphic illustration of eliminating the data samples with time instants later than the delay estimate $\hat{\tau}^{(1)}$ in the first iteration, which are marked by the shadowed area, FIG. 8A shows the strongest component detected in the first iteration is further removed from the truncated data sequence, which are also marked by the shadowed area, and FIG. 8B represents the resulting updated data sequence prepared for the second iteration n = 2, which is illustrated by the solid line.

At Step S18, i.e., when the termination criterion is satisfied, the iteration is terminated, and the smallest delay estimate with amplitude greater than the threshold is taken as the first arrival estimate.

In this manner, strong multipath components of a received signal and thus their damaging effects on estimation performance are removed sequentially in each iteration until the first arriving signal component is detected. Therefore, a high estimation accuracy can be achieved with a low computational complexity, even when any dominant multipath signal components exist.

Industrial Applicability

In this invention, an apparatus and a method for the first arrival detection are provided, which can greatly improve the estimation accuracy especially when the first arriving signal component is not dominant among multipath components of a received signal, and the computation complexity is very low. The method and the apparatus according to this invention can be adopted for precision ranging.

**Claims**

1. A delay estimation apparatus comprising:

   correlation means (41) which generates a correlation function based on a received signal and a supplied template waveform;
   AD (analog to digital) conversion means (42) which samples said correlation function generated by said correlation means (41) into discrete samples;
   and arithmetic operation means (43) which estimates delays of multipath components of said received signal based on said discrete samples generated by said AD conversion means (42),
   wherein said arithmetic operation means (43) includes an iteration procedure where in each iteration, the time delay and the amplitude of the strongest signal component are estimated based on the present sample sequence, and said sample sequence is updated by deducting the estimated strongest component from said sample sequence; said iteration is terminated when a termination criterion is satisfied,
   wherein in each said iteration, said amplitude estimate of said strongest component is given by the maximum likelihood (ML) solution, and said ML solution is an optimal estimate such that a probability function which summarizes statistics regarding given observations is maximized.

2. The delay estimation apparatus according to claim 1, which is adopted as a first arrival detection apparatus or wireless ranging apparatus, and said first arrival detection apparatus is to estimate the delay of the first arriving signal component of a received signal in a wireless communication system.

3. The delay estimation apparatus according to claim 1 or 2, which is adopted in a UWB (Ultra Wide Band) communication system.

4. A delay estimation method, comprising:

   a correlation step (S11) at which a correlation function between a received signal and a supplied template waveform is generated;
   an AD (analog to digital) conversion step at which said correlation function generated at said correlation step is sampled into discrete samples (S12);
   and an arithmetic operation step at which time delays of multipath components of said received signal are obtained based on said discrete samples generated at said AD conversion step (S14),
   wherein said arithmetic operation step includes an iteration procedure where in each iteration, the time delay and the amplitude of the strongest signal component are estimated based on the present sample sequence, and said sample sequence is updated by deducting the estimated strongest component from said sample sequence; said iteration is terminated when a termination criterion is satisfied.
   wherein in each said iteration, said amplitude estimate of said strongest component is given by the maximum likelihood (ML) solution, and said ML solution is an optimal estimate such that a probability function which summarizes statistics regarding given observations is maximized.

5. The delay estimation method according to claim 4, which is adopted as a first arrival detection method or wireless ranging method, and said first arrival detection method is to estimate the time delay of the first arriving signal component of a received signal in a wireless communication system.

6. The delay estimation method according to claim 4 or 5, which is adopted in a UWB (Ultra Wide Band) communication system.

**EP 1 910 862 B1**

**Patentansprüche**

1. Verzögerungsschätzvorrichtung umfassend:

   eine Korrelationseinrichtung (41), welche eine Korrelationsfunktion auf Grundlage eines empfangenen Signals und einer zugeführten Vorlagewellenform erzeugt;
   eine AD (Analog zu digital)-Konvertierungseinrichtung (42), welche die Korrelationsfunktion, die durch die Korrelationseinrichtung (41) erzeugt wurde, in diskrete Proben beprobt;
   und eine Arithmetikablaufeinrichtung (43), welche Verzögerungen von Mehrfachwegkomponenten des empfangenen Signals auf der Grundlage der durch
   die AD-Konvertierungseinrichtung (42) erzeugten diskreten Proben schätzt,
   wobei die Arithmetikablaufeinrichtung (43) eine Iterationsprozedur enthält, in welcher jede Iteration, die Zeitverzögerung und die Amplitude der stärksten Signalkomponente auf der Grundlage der vorliegenden Probensequenz geschätzt werden, und die Probensequenz durch Abziehen der geschätzten stärksten Komponente von der Probensequenz aktualisiert wird;
   wobei die Iteration beendet wird, wenn ein Beendigungskriterium erfüllt ist,
   wobei in jeder Iteration die Amplitudenschätzung der stärksten Komponente durch die maximale Wahrscheinlichkeits(ML)-Lösung gegeben ist, und die ML-Lösung eine optimale Schätzung ist, so dass eine Wahrscheinlichkeitsfunktion, welche Statistiken hinsichtlich gegebener Beobachtungen zusammenfasst, maximiert wird.

2. Verzögerungsschätzvorrichtung gemäss Anspruch 1, welche als eine Erstankunft-Erfassungsvorrichtung oder drahtlose Entfernungsmessungsvorrichtung angewendet ist, und wobei die Erstankunft-Erfassungsvorrichtung zur Schätzung der Verzögerung der erstankommenden Signalkomponente eines empfangenen Signals in einem drahtlosen Kommunikationssystem dient.

3. Verzögerungsschätzvorrichtung gemäss Anspruch 1 oder 2, welche in einem UWB (Ultra Wide Band = Ultra-Breit-Band)-Kommunikationssystem angewendet ist.

4. Verzögerungsschätzverfahren, umfassend:

   einen Korrelationsschritt (S11), bei welchem eine Korrelationsfunktion zwischen einem empfangenen Signal und einer zugeführten Vorlagewellenform erzeugt wird; einen AD (Analag zu Digital)-Konvertierungsschritt, bei welchem die Korrelationsfunktion, die in dem Korrelationsschritt erzeugt wird, in diskrete Proben beprobt wird (S12);
   und einen Arithmetikablaufschritt, bei welchem Zeitverzögerungen der Mehrfachwegkomponenten des empfangenen Signals auf der Grundlage der diskreten Proben erhalten werden, welche in dem AD-Konvertierungsschritt erzeugt werden (S14),
   wobei der Arithmetikablaufschritt eine Iterationsprozedur enthält, wobei in jeder Iteration die Zeitverzögerung und die Amplitude der stärksten Signalkomponente auf der Grundlage der vorliegende Probensequenz geschätzt werden, und die Probensequenz durch Abziehen der geschätzten stärksten Komponente von der Probensequenz aktualisiert wird; wobei die Iteration beendet wird, wenn eine Beendigungsbedingung erfüllt ist;
   wobei in jeder Iteration, die Amplitudenschätzung der stärksten Komponente durch die maximale Wahrscheinlichkeits (ML)-Lösung gegeben ist, und die ML-Lösung eine optimale Schätzung ist, so dass eine Wahrscheinlichkeitsfunktion, welche Statistiken hinsichtlich gegebener Beobachtungen zusammenfasst, maximiert wird.

5. Verzögerungsschätzverfahren gemäss Anspruch 4, welches als ein Erstankunft-Erfassungsverfahren oder drahtloses Entfernungsmessungsverfahren angewendet wird, und wobei das Erstankunft-Erfassungsverfahren zum Schätzen der Zeitverzögerung der erstankommenden Signalkomponente eines empfangenen Signals in einem drahtlosen Kommunikationssystem dient.

6. Verzögerungsschätzverfahren gemäss Anspruch 4 oder 5, welches in einem UWB (Ultra Wide Band = Ultra-Breit-Band)-Kommunikationssystem angewendet wird.

**Revendications**

1. Appareil d'estimation de délai comprenant :

un moyen de corrélation (41) qui génère une fonction de corrélation sur la base d'un signal reçu et d'une forme d'onde modèle fournie ;

un moyen de conversion AD (d'analogique en numérique) (42) qui échantillonne ladite fonction de corrélation générée par ledit moyen de corrélation (41) en échantillons discrets ; et

un moyen d'opération arithmétique (43) qui estime des délais de composants multivoies dudit signal reçu sur la base desdits échantillons discrets générés par ledit moyen de conversion AD (42),

dans lequel ledit moyen d'opération arithmétique (43) comprend une procédure d'itération dans laquelle, à chaque itération, le délai de temps et l'amplitude du plus fort composant de signal sont estimés sur la base de la présente séquence d'échantillons, et ladite séquence d'échantillons est mise à jour en déduisant le plus fort composant estimé de ladite séquence d'échantillons ; ladite itération est terminée lorsqu'un critère de terminaison est satisfait,

dans lequel, à chaque dite itération, ladite estimation d'amplitude dudit plus fort composant est donnée par la solution de probabilité maximale (ML), et ladite solution ML est une estimation optimale de sorte qu'une fonction de probabilité qui résume des statistiques concernant des observations données soit maximisée.

2. Appareil d'estimation de délai selon la revendication 1, qui est adopté en tant qu'appareil de détection de première arrivée ou qu'appareil de détermination de portée sans fil, et ledit appareil de détection de première arrivée est destiné à estimer le délai du composant de signal arrivant en premier d'un signal reçu dans un système de communication sans fil.

3. Appareil d'estimation de délai selon la revendication 1 ou 2, qui est adopté dans un système de communication UWB (bande ultralarge).

4. Procédé d'estimation de délai comprenant :

une étape de corrélation (S11) à laquelle une fonction de corrélation entre un signal reçu et une forme d'onde modèle fournie est générée ;

une étape de conversion AD (d'analogique en numérique) (42) durant laquelle ladite fonction de corrélation générée à ladite étape de corrélation est échantillonnée en échantillons discrets.(S12) ; et

une étape d'opération arithmétique à laquelle des délais de temps de composants multivoies dudit signal reçu sont obtenus sur la base desdits échantillons discrets générés à ladite étape de conversion AD (S 14),

dans lequel ladite étape d'opération arithmétique comprend une procédure d'itération

dans laquelle, à chaque itération, le délai de temps et l'amplitude du plus fort composant de signal sont estimés sur la base de la présente séquence d'échantillons, et ladite séquence d'échantillons est mise à jour en déduisant le plus fort composant estimé de ladite séquence d'échantillons ; ladite itération est terminée lorsqu'un critère de terminaison est satisfait,

dans lequel, à chaque dite itération, ladite estimation d'amplitude dudit plus fort composant est donnée par la solution de probabilité maximale (ML), et ladite solution ML est une estimation optimale de sorte qu'une fonction de probabilité qui résume des statistiques concernant des observations données soit maximisée.

5. Procédé d'estimation de délai selon la revendication 4, qui est adopté en tant que procédé de détection de première arrivée ou que procédé de détermination de portée sans fil, et ledit procédé de détection de première arrivée est destiné à estimer le délai de temps du composant de signal arrivant en premier d'un signal reçu dans un système de communication sans fil.

6. Procédé d'estimation de délai selon la revendication 4 ou 5, qui est adopté dans un système de communication UWB (bande ultralarge).

## FIG. 1

# FIG. 2

*FIG. 3*

EP 1 910 862 B1

# FIG. 4

# *FIG. 5*

```
              ┌─────────────────────────┐
              │          START          │
              └─────────────────────────┘
                           │
              ┌─────────────────────────┐
              │       CORRELATION       │────S11
              └─────────────────────────┘
                           │
              ┌─────────────────────────┐
              │        SAMPLING         │────S12
              └─────────────────────────┘
                           │                              n = n+1
              ┌─────────────────────────┐
              │      SELECT SIGNAL      │────S13
              └─────────────────────────┘
                           │
              ┌─────────────────────────┐
              │      ESTIMATE τ̂n        │────S14
              └─────────────────────────┘
                           │
              ┌─────────────────────────┐
              │      ESTIMATE Ân        │────S15
              └─────────────────────────┘
                           │              S16
                      ╱─────────────╲
               ╱─────────────────────────────╲     NO
              │      SATISFYING A              │──────────┐      S17
               ╲  TERMINATION CRITERION?     ╱           │
                ╲───────────────────────────╱            ↓
                           │                    ┌─────────────────────┐
                          YES                   │       MODIFY        │
                           │                    │  THE SAMPLE SEQUENCE │
                           │                    └─────────────────────┘
              ┌─────────────────────────┐
              │         PRODUCE          │
              │  THE FIRST ARRIVAL DELAY │────S18
              │      ESTIMATE τ̂n         │
              └─────────────────────────┘
                           │
              ┌─────────────────────────┐
              │           END            │
              └─────────────────────────┘
```

EP 1 910 862 B1

# FIG. 6

16

EP 1 910 862 B1

## FIG. 7A

$h(t)$

$h(t_{i1+2})$

$h(t_{i1+1})$

$n=1$

$t$

$\hat{\tau}^{(1)}$

## FIG. 7B

EP 1 910 862 B1

## FIG. 8A

FIG. 8B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6839378 B1

### Non-patent literature cited in the description

- **J-Y. Lee ; A. R. Scholtz.** Ranging in a dense mulitpath environment using a UWB radio link. *IEEE J. Selected Areas in Communications,* December 2002, vol. 20, 1677-83
- **J. Vidal ; M. Najar ; R. Jativa.** High resolution time-of-arrival detection for wireless positioning systems. *Proc. 56th IEEE Vehicular Technology Conference,* September 2002, vol. 4, 2283-7
- **J. Vidal ; R. E. Jativa.** First arriving path detection for subscriber location in mobile communication systems. *Proc. IEEE International Conference on Acoustics, Speech, and Signal Processing 2002,* May 2002, vol. 3, 2733-36
- **Y.Qi ; R. Kohno.** Mitigation of sampling-induced errors in delay estimation. *Proc. 2005 IEEE International Conference on Ultra-Wideband,* September 2005